# EUROPÄISCHE PATENTSCHRIFT

(11) **EP 0 973 057 B1**
(45) Veröffentlichungstag und Bekanntmachung des Hinweises auf die Patenterteilung: **11.02.2004**
(21) Anmeldenummer: 99890195.3
(22) Anmeldetag: 17.06.1999
(51) Int. Cl.: G02C 5/22

(54) **Federscharnier für eine Brille**
Elastic Hinge for Spectacles
Charnière élastique pour lunettes

(30) Priorität: 14.07.1998 AT 121098
(43) Veröffentlichungstag der Anmeldung: 19.01.2000
(73) Patentinhaber: Zach, Ronald, 4053 Haid (AT)
(72) Erfinder: Zach, Ronald, 4053 Haid (AT)
(74) Vertreter: Hübscher, Helmut, Dipl.-Ing.

(56) Entgegenhaltungen:
- DE-A- 3 201 649
- DE-A- 19 530 922
- DE-U- 9 400 456
- FR-A- 1 271 442
- US-A- 3 671 111

## Beschreibung

Die Erfindung bezieht sich auf ein Federscharnier für eine Brille mit zwei einerseits einem Backen und anderseits einem Bügel zugeordneten Scharnierteilen, von denen einer zwei Scharnierlappen aufweist, zwischen denen ein Gelenkkörper des anderen Scharnierteiles um eine in den beiden Scharnierlappen gehaltene Scharnierachse drehbar gelagert ist, und mit einem die Strecklage des Bügels bestimmenden Drehanschlag zwischen den beiden Scharnierteilen.

Um den über ein Scharniergelenk an einem Backen angelenkten Bügel einer Brille über seine durch den Anschlag des Bügelendes am Backen bestimmte, die Tragestellung ergebende Strecklage hinaus ausschwenken zu können, ist es bekannt (EP 0 340 161 A1), den bügelseitigen Scharnierteil in einem auf den Bügel befestigten Gehäuse in Bügellängsrichtung verschiebbar zu lagern und mit einer Feder zu beaufschlagen, gegen deren Kraft der bügelseitige Scharnierteil aus dem Gehäuse ausgezogen werden kann, um bei einer entsprechenden Überlast ein Verschwenken des Bügels über seine Strecklage hinaus zu ermöglichen. Nachteilig bei solchen Konstruktionen ist allerdings, daß aufgrund des begrenzten Verschiebeweges des bügelseitigen Scharnierteiles im Bügelgehäuse die zulässige Überstreckung des Bügelgelenkes beschränkt bleibt, so daß bei höheren Schwenkbelastungen, mit denen vor allem bei Kinder- und Sportbrillen gerechnet werden muß, die Bruchsicherheit solcher Federscharniere bei einer Überstreckung unzureichend ist.

Der Erfindung liegt somit die Aufgabe zugrunde, ein Federschamier für eine Brille zu schaffen, das eine auch höheren Anforderungen hinsichtlich der Bruchsicherheit des Scharniergelenkes genügende Überstreckung erlaubt.

Ausgehend von einem Scharniergelenk für eine Brille der eingangs geschilderten Art löst die Erfindung die gestellte Aufgabe dadurch, daß der Drehanschlag aus einem koaxial zum Gelenkkörper drehbar gelagerten Anschlagnocken besteht, daß der Gelenkkörper für den Anschlagnocken einen Stützanschalg bildet und daß der Anschlagnocken gegen die Kraft einer im Schließsinn des Bügels wirksamen Stützfeder vom Stützanschlag wegschwenkbar ist.

Durch die Ausbildung des Drehanschlages als koaxial zum Gelenkkörper gelagerter Anschlagnocken, der federnd gegen einen Stützanschlag des Gelenkkörpers gedrückt wird, schlägt beim Aufschwenken des Bügels der Anschlagnocken in der Strecklage des Bügels an den vorgesehenen Gegenanschlag des die Scharnierlappen bildenden Scharnierteiles an. Eine Überstreckung des Scharniergelenkes erfordert demnach ein Wegschwenken des Anschlagnockens von seinem Stützanschlag am Gelenkkörper, was nur gegen die im Schließsinn des Bügels wirksame Stützfeder möglich ist, die somit das für eine Überstrekkung des Scharniergelenkes erforderliche Drehmoment bestimmt. Da der Drehwinkel des Anschlagnockens gegenüber dem Gelenkkörper dem Überstreckungswinkel des Scharniergelenkes entspricht und dieser Drehwinkel ohne weiteres 90° und mehr betragen kann, kann eine Beschädigungsgefahr für das Scharniergelenk durch eine Überstreckung bei einer solchen Konstruktion weitgehend ausgeschlossen werden.

Aufgrund der zum Gelenkkörper koaxialen Lagerung des Anschlagnockens kann der jeweils geforderte Überstreckungswinkel konstruktiv durch einen entsprechenden Drehwinkel des Anschlagnockens gegenüber dem Gelenkkörper einfach vorgegeben werden. Es muß lediglich dafür gesorgt werden, daß die den Anschlagnocken belastende Stützfeder einen diesem Winkelschritt entsprechenden Federweg zuläßt. Zu diesem Zweck kann die Stützfeder vorteilhaft als Schraubenfeder ausgebildet sein, wobei sich dann besonders vorteilhafte Konstruktionsverhältnisse ergeben, wenn der Gelenkkörper aus einem topfartigen Gehäuse besteht, das die als Schraubenfeder ausgebildete Stützfeder aufnimmt und von der Scharnierachse durchsetzt wird. Die Enden der Schraubenfeder sind in diesem Fall lediglich am topfartigen Gehäuse und am Anschlagnocken abzustützen. Vorteilhafte konstruktive Voraussetzungen werden hiefür durch einen Anschlagnocken geschaffen, der eine die offene Stirnseite des topfartigen Gehäuses verschließende Ringscheibe mit einem radial nach außen vorstehenden Nockenansatz bildet, wobei dieser Nockenansatz in eine stirnseitig offene, den Stützanschlag bildende Umfangsausnehmung des topfartigen Gehäuses eingreift. Durch diese Umfangsausnehmung wird der mögliche Schwenkwinkel des Anschlagnockens festgelegt, weil der radial nach außen vorstehende Nockenansatz des Anschlagnockens in diese Umfangsausnehmung eingreift und nur im Bereich dieser Umfangsausnehmung verschwenkt werden kann. Die Ringscheibe des Anschlagnockens nimmt in der Ringöffnung die Scharnierachse auf, wobei über die Ringscheibe eine zusätzliche Zentrierung des topfartigen Gehäuses gegenüber der Scharnierachse möglich wird.

Die zwischen der Ringscheibe des Anschlagnockens und dem Boden des topfartigen Gehäuses eingesetzte, die Scharnierachse umschließende Schraubenfeder wird mit einer gegenseitigen Verdrehung des Anschlagnockens und des topfartigen Gehäuses ein- bzw. ausgedreht. Diese Ein- bzw. Ausdrehung der Windungen der Schraubenfeder und die damit verbundenen Durchmesseränderungen können bezüglich der Abstützung der Schraubenfeder einerseits am Anschlagnocken und anderseits am topfartigen Gehäuse dadurch berücksichtigt werden, daß die Stützfeder mit axial umgebogenen Endstücken in radialen Aufnahmeschlitzen im Boden des topfartigen Gehäuses und in der Ringscheibe des Anschlagnockens gehalten wird. In diesen Aufnahmeschlitzen ist eine radiale Verlagerung der axial umgebogenen Endstücke der Stützfeder ohne weiteres möglich.

Um die Vorspannung der als Schraubenfeder ausgebildeten Stützfeder den jeweiligen Verhältnissen entsprechend anpassen zu können, können im Boden des topfartigen Gehäuses und/oder in der Ringscheibe des Anschlagnockens mehrere radiale Aufnahmeschlitze über den Umfang verteilt angeordnet sein, so daß die Vorspannung der Schraubenfeder davon abhängt, in welchen der radialen Aufnahmeschlitze die umgebogenen Endstücke der Feder eingesetzt werden.

In der Zeichnung ist der Erfindungsgegenstand beispielsweise dargestellt. Es zeigen
- Fig. 1: ein erfindungsgemäßes Scharniergelenk für eine Brille in einem vereinfachten Axialschnitt,
- Fig. 2: einen Schnitt nach der Linie II-II der Fig. 1 und
- Fig. 3: eine der Fig. 2 entsprechende Darstellung des Scharniergelenks in einer Überstrecklage.

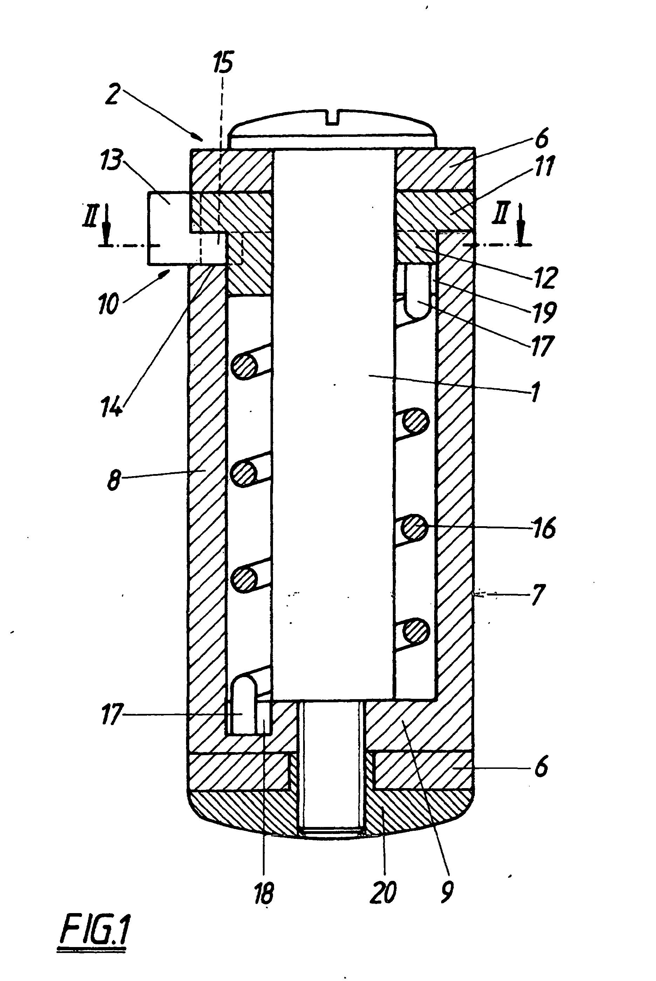

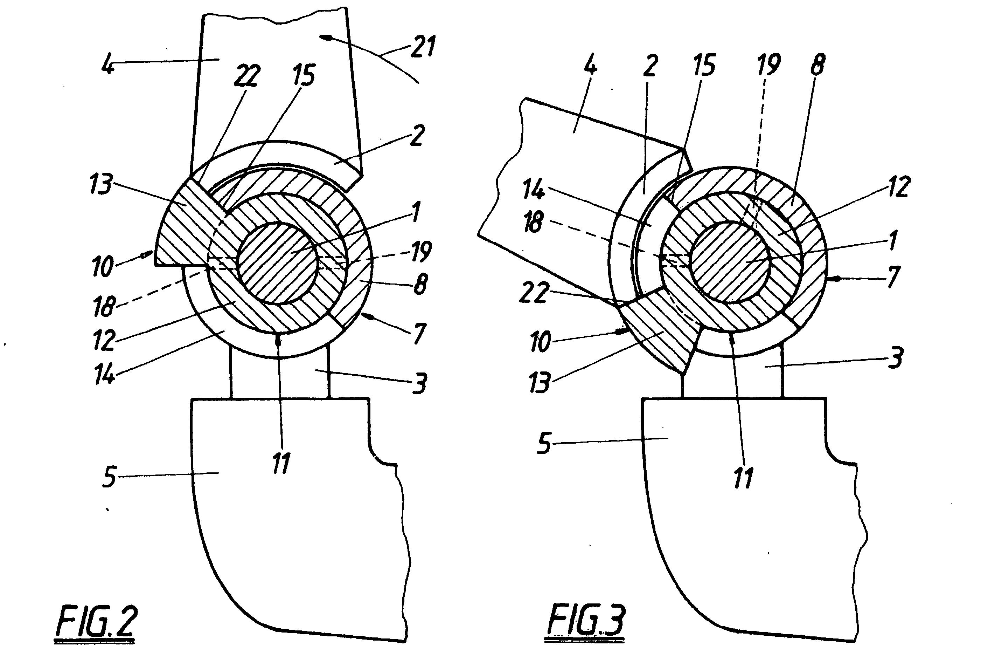

Das Scharniergelenk gemäß dem dargestellten Ausführungsbeispiel besteht aus zwei über eine Scharnierachse 1 miteinander gelenkig verbundenen Scharnierteilen 2 und 3, die einerseits mit einem Brillenbügel 4 und anderseits mit einem Backen 5 verbunden sind, wie dies die Fig. 2 und 3 zeigen. Der Scharnierteil 2 bildet zwei Scharnierlappen 6, zwischen denen ein Gelenkkörper 7 des anderen Scharnierteils 3 eingreift. Dieser Gelenkkörper 7 bildet ein topfartiges Gehäuse 8, das auf seiner dem Boden 9 gegenüberliegenden Stirnseite einen Anschlagnocken 10 drehbar aufnimmt. Dieser Anschlagnocken 10 bildet eine von der Scharnierachse 1 durchsetzte Ringscheibe 11, die mit einem einspringenden Ansatz 12 innerhalb des topfartigen Gehäuses 8 zentriert wird. Die Ringscheibe 11 trägt einen radial nach außen vorstehenden Nockenansatz 13, der in eine stirnseitig offene Umfangsausnehmung 14 ragt. Diese Umfangsausnehmung 14 bildet für den Nockenansatz 13 einen Stützanschlag 15, gegen den der Nockenansatz 13 des Anschlagnockens 10 federnd angedrückt wird, und zwar durch eine in das topfartige Gehäuse 8 eingesetzte Stützfeder 16, die als Schraubenfeder ausgebildet ist und die Scharnierachse 1 umschließt. Die axial umgebogenen Endstücke 17 dieser Stützfeder 16 greifen in radiale Aufnahmeschlitze 18 und 19 einerseits im Boden 9 des Gehäuses 8 und anderseits in der Ringscheibe 11 des Anschlagnockens 10 ein, wie dies insbesondere der Fig. 1 entnommen werden kann. Werden im Boden 9 und/oder in der Ringscheibe 11 mehrere über den Umfang verteilte Aufnahmeschlitze 18 bzw. 19 vorgesehen, so kann durch die Wahl des jeweiligen Aufnahmeschlitzes die Vorspannung der Stützfeder 16 eingestellt werden.

Zur Montage des Scharniergelenkes ist zunächst die Stützfeder 16 in das topfartige Gehäuse 8 des Gelenkkörpers 7 einzusetzen und dann mit dem aufgesetzten Anschlagnocken zwischen die Scharnierlappen 6 des Scharnierteiles 2 einzuschieben, bevor die Scharnierteile 2 und 3 über die Scharnierachse 1 miteinander verbunden werden können. Die Scharnierachse 1 ist als Schraube ausgebildet, die die Scharnierlappen 6, den Anschlagnocken 10 und den Boden 9 des Gehäuses 8 durchsetzt und mit Hilfe einer Gegenmutter 20 axial festgelegt wird, die sich innerhalb des anliegenden Scharnierlappens 6 zentriert. Da der Anschlagnocken 10 durch die Stützfeder 16 an den Stützanschlag 15 des Gelenkkörpers 7 angedrückt gehalten wird, schlägt beim Öffnen des Bügels 4 im Sinne des Pfeiles 21 (Fig. 2) der mit dem Anschlagnocken 13 zusammenwirkende Gegenanschlag 22 des Scharnierteiles 2 in der Streckstellung des Bügels 4 am Nockenansatz 13 des Anschlagnockens 10 an. Aus dieser Anschlagstellung kann der Bügel 4 über die Strecklage hinaus in Richtung des Pfeiles 21 nur dann weiterverschwenkt werden, wenn der Anschlagnocken 10 gegen die Kraft der Stützfeder 16 vom Stützanschlag 15 des Gelenkkörpers 8 weggeschwenkt wird. In der Fig. 3 ist eine solche Überstreckung des Scharniergelenkes dargestellt. Da der Nockenansatz 13 innerhalb der Umfangsausnehmung 14 des topfartigen Gehäuses 8 über einen Winkel von mehr als 90° gegenüber dem Gehäuse 8 verschwenkt werden kann, ist eine entsprechende Überstreckung des Scharniergelenkes möglich. Die Stützfeder 16, die im Schließsinn des Bügels 4 auf den Anschlagnocken 10 einwirkt, wird dabei aufgedreht. Diese Aufdrehung der Windungen der Stützfeder 16 wird über die in die radialen Aufnahmeschlitze 18 und 19 eingreifenden Endstücke 17 der Stützfeder 16 berücksichtigt. Bei einer Entlastung des Bügels 4 wird der Bügel 4 durch die Stützfeder 16 wieder in die Strecklage nach der Fig. 2 zurückgeschwenkt, aus der er ohne Federbelastung geschlossen werden kann, weil ja der Anschlagnocken 10 am Stützanschlag 15 anliegt, der mit dem Backen 5 drehfest verbunden ist.

Es braucht wohl nicht besonders hervorgehoben zu werden, daß die Erfindung nicht auf das dargestellte Ausführungsbeispiel beschränkt ist, weil es lediglich darauf ankommt, den Anschlagnocken 10 gegenüber dem Gelenkkörper 7 verschwenkbar zu lagern und mit Hilfe einer Stützfeder 16 gegen einen Stützanschlag 15 zu drücken, von dem er bei einer Überstreckung des Scharniergelenkes gegen die Kraft der Stützfeder 16 weggeschwenkt werden kann.

## Patentansprüche

1. Federscharnier für eine Brille mit zwei einerseits einem Backen (5) und anderseits einem Bügel (4) zugeordneten Scharnierteilen (2, 3), von denen einer zwei Scharnierlappen (6) aufweist, zwischen denen ein Gelenkkörper (7) des anderen Scharnierteiles (3) um eine in den beiden Scharnierlappen (6) gehaltene Scharnierachse (1) drehbar gelagert ist, und mit einem die Strecklage des Bügels (4) bestimmenden Drehanschlag zwischen den beiden Scharnierteilen (2, 3), **dadurch gekennzeichnet, daß** der Drehanschlag aus einem koaxial zum Gelenkkörper (7) drehbar gelagerten Anschlagnocken (10) besteht, daß der Gelenkkörper (7) für den Anschlagnocken (10) einen Stützanschlag (15) bildet und daß der Anschlagnocken (10) gegen die Kraft einer im Schließsinn des Bügels (4) wirksamen Stützfeder (16) vom Stützanschlag (15) wegschwenkbar ist, wodurch der Bügel über seine normale Streckstellung hinaus gefedert aufgeklappt werden kann.

2. Federscharnier nach Anspruch 1, **dadurch gekennzeichnet, daß** der Gelenkkörper (7) aus einem topfartigen Gehäuse (8) besteht, das die als Schraubenfeder ausgebildete, von der Scharnierachse (1) durchsetzte Stützfeder (16) aufnimmt.

3. Federscharnier nach Anspruch 2, **dadurch gekennzeichnet, daß** der Anschlagnocken (10) eine die offene Stirnseite des topfartigen Gehäuses (8) verschließende Ringscheibe (11) mit einem radial nach außen vorstehenden Nockenansatz (13) bildet, der in eine stirnseitig offene, den Stützanschlag (15) bildende Umfangsausnehmung (14) des topfartigen Gehäuses (8) eingreift.

4. Federscharnier nach Anspruch 2 oder 3, **dadurch gekennzeichnet, daß** die Stützfeder (16) mit axial umgebogenen Endstücken (17) in radialen Aufnahmeschlitzen (18, 19) einerseits im Boden (9) des topfartigen Gehäuses (8) und anderseits in der Ringscheibe (11) des Anschlagnockens (10) gehalten ist.

5. Federscharnier nach Anspruch 4, **dadurch gekennzeichnet, daß** im Boden (9) des topfartigen Gehäuses (8) und/oder in der Ringscheibe (11) des Anschlagnockens (10) mehrere radiale Aufnahmeschlitze (18, 19) über den Umfang verteilt angeordnet sind.

## Claims

1. An elastic hinge for spectacles, comprising two parts (2, 3) associated at one end with a temple (5) and at the other end with a bow (4), one part having two hinge loops (3) between which a joint member (7) of the other part (3) is rotatably mounted around a pin (1) held in the two loops (6), the hinge also comprising a rotary stop between the two hinge parts (2, 3) for determining the extended position of the spectacles (4), **characterised in that** the rotary stop comprises a cam (10) mounted for rotating coaxially with the joint member, the joint member (7) forms a support stop (15) for the cam (10), and the cam (10) can be swung away from the stop (15) against the force of a support spring (16) operating in the direction for closing the temple (4), whereby the bow can be opened beyond its normal extended position by spring action.

2. An elastic hinge according to claim 1, **characterised in that** the joint member (7) comprises a pot-like casing (8) which holds the support spring (16), in the form of a helical spring through which the hinge pin (1) extends.

3. An elastic hinge according to claim 2, **characterised in that** the cam (10) is in the form of a disc (11) which closes the open top of the pot-like casing (8) and has a radially outwardly projecting extension (13) which engages in a peripheral recess (14) in the pot-like casing (8), open at the endface and receiving the stop (15).

4. An elastic hinge according to claim 2 or 3, **characterised in that** the supporting spring (16) is held by end members (17), bent in the axial direction, in radial receiving slots (18, 19) in the base (9) of the pot-like casing (8) and in the disc (11) of the cam (10).

5. An elastic hinge according to claim 4, **characterised in that** a number of radial receiving slots (18, 19) are distributed around the periphery in the bottom (9) of the pot-like casing (8) and/or in the disc (11) of the cam (10).

## Revendications

1. Charnière élastique pour lunettes, munie de deux parties de charnière (2, 3) associées, d'une part, à un tenon (5) et, d'autre part, à une branche (4), parties de mâchoires dont l'une présente deux languettes de charnière (6), entre lesquelles un corps d'articulation (7) de l'autre partie de charnière (3) est monté à rotation, en pouvant tourner autour d'un axe de charnière (1), maintenu dans les deux languettes de charnière (6), et avec une butée de rotation, déterminant la position étendue de la branche (4) entre les deux parties de charnière (2, 3), **caractérisée en ce que** la butée de rotation est formée d'un ergot de butée (10), monté à rotation, coaxialement au corps d'articulation (7), **en ce que** le corps d'articulation (7) forme, pour l'ergot de butée (10), une butée d'appui (15), et **en ce que** l'ergot de butée (10) est susceptible d'être écarté par pivotement de la butée d'appui (15), à l'encontre de la force d'un ressort d'appui (16), agissant dans le sens de la fermeture de la branche (4), faisant que la branche peut être ouverte par rabattement élastiquement en passant par sa position étirée normale.

2. Charnière élastique selon la revendication 1, **caractérisée en ce que** le corps d'articulation (7) est formé d'un boîtier (8) du type d'un pot, logeant le ressort d'appui (16), réalisé sous la forme de ressort hélicoïdal et traversé par l'axe de charnière (1).

3. Charnière élastique selon la revendication 2, **caractérisée en ce que** l'ergot de butée (10) forme une rondelle annulaire (11) fermant la face frontale ouverte du boîtier (8) du genre d'un pot, avec un appendice d'ergot (13) en saillie radialement vers l'extérieur, qui s'engage dans un évidement périphérique (14), ouvert côté frontal, formant la butée d'appui (15), du boîtier (8) du type d'un pot.

4. Charnière élastique selon la revendication 2 ou 3, **caractérisée en ce que** le ressort d'appui (16) est maintenu, par des pièces d'extrémité (17) repliées, dans des fentes de logement (18, 19) radiales, d'une part, dans le fond (9) du boîtier (8) du genre d'un pot et, d'autre part, dans la rondelle annulaire (11) de l'ergot de butée (10).

5. Charnière élastique selon la revendication 4, **caractérisée en ce qu'**une pluralité de fentes de logement (18, 19) radiales sont disposées, réparties sur la périphérie, dans le fond (9) du boîtier (8) du genre d'un pot et/ou dans la rondelle annulaire (11) de l'ergot de butée (10).
